# EUROPÄISCHE PATENTSCHRIFT

(11) **EP 3 114 930 B1**
(45) Veröffentlichungstag und Bekanntmachung des Hinweises auf die Patenterteilung: **23.05.2018**
(21) Anmeldenummer: 16176036.8
(22) Anmeldetag: 23.06.2016
(51) Int. Cl.: A01M 7/00

(54) **SPRITZSYSTEM**
SPRAYING SYSTEM
PULVÉRISATEUR

(30) Priorität: 06.07.2015 DE 102015212615
(43) Veröffentlichungstag der Anmeldung: 11.01.2017
(73) Patentinhaber: Deere & Company, Moline, IL 61265 (US)
(72) Erfinder: Engelbrecht, Joshua J, 5801 HX Venray (NL); Van Gils, Martijn, 5441 XZ Oeffelt (NL)
(74) Vertreter: Reichert, Christian

(56) Entgegenhaltungen:
- EP-A2- 1 958 506
- EP-A2- 2 223 594
- DE-A1-102012 100 450
- DE-A1-102013 103 620
- DE-U1-202004 015 338

## Beschreibung

Die Erfindung betrifft ein Spritzsystem einer landwirtschaftlichen Feldspritze, mit einem Spritzgestänge zum Ausbringen einer Spritzlösung, einem Tank für die Spritzlösung, einer Befülleinrichtung zum Befüllen des Tanks, einer Spüleinrichtung zum Spülen des Tanks, einer Umwälzeinrichtung zum Umwälzen der Spritzlösung im Tank, einer Ausbringeinrichtung zum Fördern der Spritzlösung aus dem Tank, einer integrierten selbstansaugenden Pumpe, einer integrierten nicht selbstansaugenden Pumpe und einer elektronischen Steuereinrichtung zum Steuern des Spritzsystems.
Es sind Spritzsysteme für landwirtschaftliche Feldspritzen bekannt, die zum Ausbringen von Spritzlösungen, die chemische Applikationen zum Pflanzenschutz oder zur Schädlingsbekämpfung enthalten, eingesetzt werden. Ein Spritzsystem ist aus DE 10 2013 103620 A1 bekannt. Derartige Spritzsysteme umfassen in der Regel eine Befülleinrichtung zum Befüllen eines Tanks für die auszubringende Spritzlösung mit Wasser oder einer anderen Applikationsträgerflüssigkeit, beispielsweise Düngeflüssigkeit. Über eine Saugeinrichtung wird die sich in einem im Spritzsystem integrierten Spritzmitteltank befindliche chemische Applikation in den Tank eingespeist, so dass sich eine Spritzlösung aus einem Gemisch aus Wasser, oder einer anderen Applikationsträgerflüssigkeit, und der chemischen Applikation ergibt. Die so erhaltene Spritzlösung wird in der Regel über ein an der Feldspritze angehängtes Spritzgestänge mit einer Vielzahl von mit Spritzdüsen versehenen Teilbreiten, welche sich horizontal über eine zu bearbeitende Fläche erstrecken, ausgebracht. Mit dem Spritzgestänge ist ein umfangreiches Leitungssystem mit fluidfördernden bzw. fluidsteuernden Komponenten (Pumpen, Steuerventile, Druckbegrenzer, Druckregler etc.) verbunden, welche über eine Steuereinheit ansteuerbar sind. In der Regel sind mehrere Pumpen vorgesehen, denen unterschiedliche Funktionen zugewiesen sind. So ist es üblich, zum Befüllen des Tanks, zum Spülen des Tanks und zur Verdünnung der Spritzlösung, zum Umwälzen der Spritzlösung und zum Ausbringen der Spritzlösung jeweils separate Pumpen bzw. Pumpensysteme anzuordnen oder, falls nicht im Spritzsystem integriert, für den entsprechenden Zweck anzuschließen, beispielsweise zum Befüllen des Tanks. Die Vielzahl von Pumpen erfordert eine entsprechende Vielzahl der genannten fluidfördernden bzw. fluidsteuernden Komponenten, wodurch Komplexität und Teilevielfalt des Spritzsystems erhöht wird. Die zum Ausbringen der Spritzlösung eingesetzten selbstansaugenden Zentrifugalpumpen werden üblicherweise von einer an der Feldspritze vorgesehenen Antriebswelle mechanisch und motordrehzahlabhängig angetrieben, wobei letzteres aufwändige Drucksteuereinrichtungen erfordert, um bei wechselnden Motordrehzahlen einen konstanten Spritzdruck bereitstellen zu können. Die mechanisch angetriebenen Zentrifugalpumpen müssen ein hohes Fördervolumen bei hohem Förderdruck liefern, sind zugleich jedoch in der Regel drehzahlgekoppelt, wodurch sich Fördergrenzen abzeichnen, was dazu führt, das zum Ausbringen der Spritzlösung oftmals mehr als eine Zentrifugalpumpe zum Einsatz kommen muss. Dies wiederum erfordert zusätzliche fluidsteuernde Komponenten, die das Spritzsystem insgesamt komplexer und aufwändiger gestalten. Es ist ferner auch bekannt zum Ausbringen der Spritzlösung eine drehzahlentkoppelte hydraulisch angetriebene, nicht-selbstansaugende Zentrifugalpumpe in Kombination mit einer Kolbenpumpe zum Aufladen der nicht-selbstansaugenden Zentrifugalpumpe einzusetzen. Eine nicht-selbstansaugende Zentrifugalpumpe weist gegenüber einer vergleichbaren selbstansaugenden Zentrifugalpumpe in der Regel ein höheres Leistungsniveau auf, wodurch hier der Einsatz von nur einer Pumpe zum Ausbringen der Spritzlösung ausreicht. Diese Variante löst jedoch nur teilweise die oben genannten Nachteile, da Aufgrund des hydraulischen Antriebs zwar ein direkter mechanischer, drehzahlgekoppelter Antrieb entfällt und durch den Einsatz einer nicht-selbstansaugenden Zentrifugalpumpe auch höhere Fördervolumen mit höherem Förderdruck realisierbar sind, jedoch eine mit Kosten verbundene zweite Pumpe zum Aufladen der nicht-selbstansaugenden Zentrifugalpumpe eigesetzt wird. Ferner sind bekannte Spritzensysteme so konzipiert, dass meist die gesamten Leitungen des Spritzsystems während des Betriebs zum Ausbringen der Spritzlösung mit der chemischen Applikation kontaminiert sind, wodurch ein anschließender Spülvorgang zur Reinigung der Leitungen sich entsprechend aufwändig gestaltet. Der diesbezügliche Aufwand wird dadurch begrenzt, dass im gesamten Spritzsystem kleinstmögliche Leitungsquerschnitte verwendet werden, wodurch insbesondere auch die Auslegung der Leitungen der Befülleinrichtung zum Befüllen des Tanks in der Regel nur einen relativ geringen Leitungsquerschnitt zulässt.

Die der Erfindung zugrunde liegende Aufgabe wird darin gesehen, ein Spritzsystem der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Spritzsystem der eingangs genannten Art derart ausgebildet, dass die selbstansaugende Pumpe ausschließlich zum Betreiben der Befülleinrichtung und der Spüleinrichtung und die nicht-selbstansaugende Pumpe zum Betreiben der Umwälzeinrichtung, der Ausbringeinrichtung und der Spüleinrichtung betreibbar ist, wobei die nicht-selbstansaugende Pumpe derart angeordnet ist, dass eine Aufladung schwerkraftbedingt durch Flüssigkeit aus dem Tank erfolgt und die Befülleinrichtung fluidisch von der Umwälzeinrichtung und der Ausbringeinrichtung getrennt ist. In diesem Zusammenhang ist "fluidisch getrennt" so zu verstehen, dass die in den Leitungen der Umwälzeinrichtung und der Ausbringeinrichtung geführte chemisch kontaminierte Flüssigkeit nicht in die Leitungen der Befülleinrichtung gelangt. Es sind nur zwei Pumpensysteme vorgesehen, wodurch die Komplexität des gesamten Spritzsystems um ein hohes Maß reduziert wird und insbesondere die Anzahl von fluidsteuernden Komponenten (Pumpen, Steuerventile, Druckbegrenzer, Druckregler etc.) gegenüber im Stand der Technik bekannten Spritzsystemen weitestgehend minimiert wird. Die beiden Pumpensysteme sind voneinander getrennt. Die gegenüber einer selbstansaugenden Pumpe förderleistungsstärkere nicht-selbstansaugende Pumpe zum Betreiben der Umwälzeinrichtung, der Ausbringeinrichtung und der Spüleinrichtung ist derart zum Tank positioniert und angeordnet, dass eine zusätzliche Pumpe zur Aufladung entfällt, da die Aufladung Schwerkraft bedingt durch Flüssigkeit aus dem Tank erfolgt, insbesondere durch eine sich bereits eingestellte Spritzlösung oder durch die noch unvermischte Applikationsträgerflüssigkeit. Ferner ist die stationär im Spritzsystem integrierte selbstansaugende Pumpe zum Betreiben der Befülleinrichtung und der Spüleinrichtung fluidisch von den Kreisläufen der nicht-selbstansaugenden Pumpe getrennt, wodurch eine Kontaminierung durch chemische Applikationen während des Spritzvorgangs vermieden wird und damit auch das gesamte Leitungssystem zum Befüllen des Tanks mit optimierten Leitungsquerschnitten, das heißt, gegenüber bekannten Spritzsystemen mit größeren Leitungsquerschnitten versehen werden kann, ohne den Aufwand für einen Spülvorgang zur Reinigung des Spritzsystems negativ zu beeinflussen. Insbesondere die Trennung der selbstansaugenden Pumpe von den Kreisläufen der nicht-selbstansaugenden Pumpe und die größeren Leitungsquerschnitte des Leitungssystems zum Befüllen des Tanks erlauben es, die selbstansaugende Pumpe mit einem höheren Fördervolumen und geringerem Förderdruck zu betreiben bzw. auszulegen, wodurch höhere Befüllzeiten beim Befüllen des Tanks mit der Applikationsträgerflüssigkeit, beispielsweise Wasser oder Düngeflüssigkeit, realisiert werden.

Die Pumpen sind hydraulisch angetrieben und damit von der Zapfwelle oder einer anderen Antriebswelle, das heißt von der Drehzahl des Fahrzeugs, beispielsweise einer selbstfahrenden Feldspritze oder eines eine gezogene Feldspritze ziehenden Schleppers, entkoppelt betreibbar. Die hydraulische Versorgung der Pumpen kann dabei in bekannter Weise durch eine am Fahrzeug oder an der Feldspritze eingerichtete Hydraulikeinrichtung erfolgen. Eine hydraulisch angetrieben Pumpe hat den Vorteil, dass, unabhängig von der Drehzahl des Fahrzeugs, Fördervolumina und Förderdruck reaktionsschnell variiert werden können. Somit können die Pumpen jederzeit mit einer für ein vorgegebenes Spritzmuster erforderlichen Leistungsabgabe betrieben werden und auf Zustandsänderungen im Gelände oder beim Betrieb des Fahrzeugs drehzahlunabhängig reagiert werden.

Alternativ können die Pumpen elektrisch angetrieben werden, wobei leistungsbedingt, vorzugsweise am Fahrzeug oder an der Feldspritze, eine Hochspannung liefernde elektronische Versorgung vorgesehen ist.

Die Pumpen sind vorzugsweise als Zentrifugalpumpen ausgebildet, auch bekannt als Strömungs- oder Kreiselpumpen. Es ist aber auch denkbar andere Arten von Pumpen einzusetzen, beispielsweise Verdrängerpumpen, wie Membran- oder Kolbenpumpen.

Die Spüleinrichtung mit Frischwasser ist derart ausgelegt, dass sie gleichzeitig auch zum Verdünnen der Spritzlösung betreibbar ist. Dazu wird aus einem in der Spüleinrichtung enthaltenen Frischwasserbehälter durch die zum Befüllen des Tanks vorgesehene selbstansaugende Pumpe Frischwasser angesaugt und in den Tank gemischt.

Die Ausbringeinrichtung kann eine Saugeinrichtung umfassen, durch welche eine Einspeisung einer chemischen Applikation aus einem Spritzmitteltank erfolgt. Die Saugeinrichtung wird beispielsweise durch eine bekannte Venturi-Einrichtung oder Venturi-Düse ausgebildet, welche in einer in der Ausbringeinrichtung enthaltenen Leitung installiert ist. Durch einen in der Leitung in den Tank strömenden Fluidstrom wird in der Saugeinrichtung ein Saugeffekt erzeugt, durch den die chemische Applikation angesaugt und in den Tank geführt wird.

Ferner kann die Ausbringeinrichtung eine Rezirkulationseinrichtung umfassen, durch welche die aus dem Tank geförderte Spritzlösung in den Tank zurückführbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

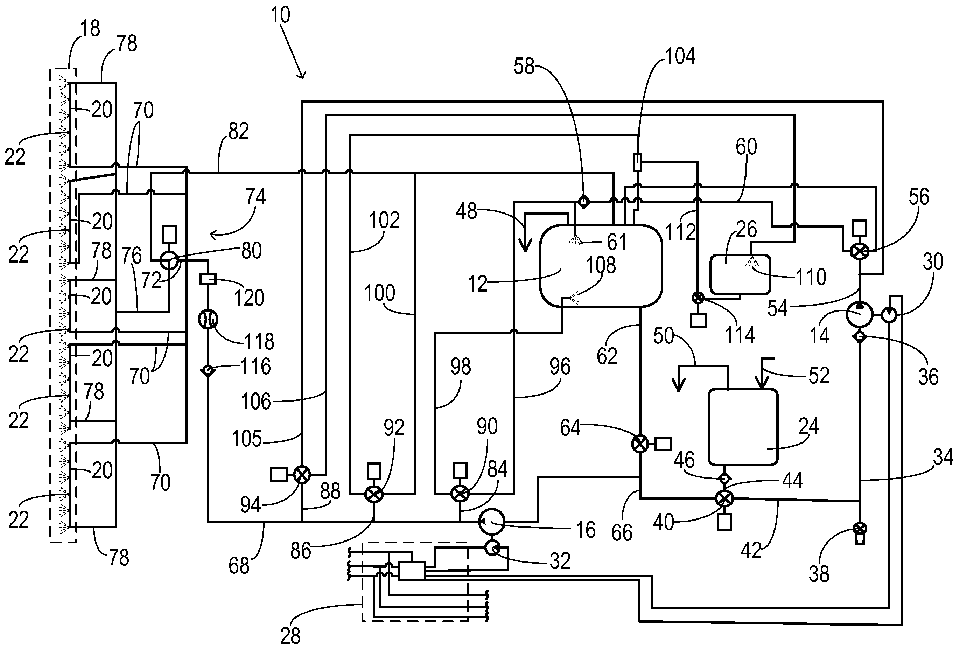

- Fig. 1: ein schematisches Schaltbild eines Sprizsystems einer landwirtschaftlichen Feldspritze.

Das in Figur 1 in einem schematischen Schaltbild dargestellte Spritzsystem 10 ist für landwirtschaftliche Feldspritzen ausgelegt und kann sowohl in selbstfahrenden Feldspritzen als auch in von einem Schlepper gezogenen oder an einen Schlepper angebauten Feldspritzen zum Einsatz kommen.

Wie in Figur 1 dargestellt ist, umfasst das Spritzsystem 10 einen Tank 12 für eine auf ein Feld auszubringende Spritzlösung, eine erste Pumpe 14 zum Befüllen des Tanks 12, zum Spülen und Reinigen eines ersten Teils des Spritzsystems 10 sowie zum Verdünnen der Spritzlösung im Tank 12, eine zweite Pumpe 16 zum Ausbringen der Spritzlösung, zum Umwälzen der Spritzlösung im Tank 12 sowie zum Spülen und Reinigen eines zweiten Teils des Spritzsystems 10. Die erste Pumpe 14 ist als selbstansaugende Zentrifugalpumpe mit relativ hohem Fördervolumen bei relativ geringem Förderdruck ausgelegt. Die zweite Pumpe 16 ist als nicht-selbstansaugende Zentrifugalpumpe ausgelegt.

Ferner umfasst das Spritzsystem 10 ein Verteilgestänge 18 mit mehreren Teilbreiten 20 an denen Spritzdüsen 22 angeordnet sind (hier nur je Teilbreite eine Spritzdüse 22 mit Bezugszeichen versehen).

Das Spritzsystem 10 umfasst des Weiteren einen Frischwassertank 24, einen Spritzmitteltank 26, der mit einer auf ein Feld oder Pflanzenbestand auszubringende chemische Applikation (z.B. Pflanzenschutzmittel, Insektenbekämpfungsmittel, Düngemittel oder andere auszubringenden Chemikalien) befüllbar ist.

Die beiden Pumpen 14, 16 werden über eine an der Feldspritze vorhandenen Hydraulikeinrichtung 28 und mit jeweils an einer Pumpe 14, 16 angeordneten Hydraulikmotoren 30, 32 hydraulisch angetrieben.

Die Pumpe 14 ist eingangsseitig mit einer Befüllleitung 34 verbunden, in der ein zur Pumpe 14 öffnendes Rückschlagventil 36 angeordnet ist. Die Befüllleitung 34 ist ferner mit einem Füllventil 38 ausgestattet, welches mit einem externen Tank (nicht gezeigt) zum Befüllen der Spritzeinrichtung mit einer Applikationsträgerflüssigkeit verbunden werden kann.

Die Befüllleitung 34 ist ferner mit einer über ein regelbares 3-Wege Ventil 40 mit dem Frischwassertank 24 verbundenen Frischwasserleitung 42 verbunden. Zwischen dem Ventil 40 und dem Frischwassertank 24 ist eine Zuführleitung 44 angeordnet, die mit einem zum Ventil 40 öffnenden Rückschlagventil 46 versehen ist.

Der Tank 12 und der Frischwassertank 24 sind jeweils mit einer Belüftungsleitung 48 bzw. 50 versehen. Die Befüllung des Frischwassertanks 24 kann über eine Befüllöffnung oder Befüllleitung 52 erfolgen.

Ausgangsseitig ist die Pumpe 14 mit einer Befüllleitung 54 versehen, die in den Tank 12 führt, wobei in der Befüllleitung 54 ein regelbares 3-Wege Ventil 56 angeordnet ist. Ausgehend von dem Ventil 56 erstreckt sich eine mit einem zum Tank 12 öffnenden Rückschlagventil 58 versehene Spülleitung 60, die in den Tank 12 führt. An dem in den Tank 12 mündenden Ende der Spülleitung 60 ist eine Spritzdüse 61 vorgesehen.

Die zweite Pumpe 16 ist eingangsseitig mit einer Speiseleitung 62 verbunden, die sich vom Tank 12 zur Pumpe 16 erstreckt. Die Pumpe 16 und die Speiseleitung 62 sind in Bezug auf den Tank 12 derart angeordnet und positioniert, dass eine im Tank 12 befindliche Flüssigkeit Schwerkraft bedingt zur Pumpe 16 strömt. Zur Strömungsunterbrechung ist in der Speiseleitung 62 ein regelbares Schließventil 64 angeordnet.

Ausgehend von dem Ventil 40 am Frischwassertank 24 erstreckt sich eine Spülleitung 66 die zwischen der zweiten Pumpe 16 und dem Schließventil 64 in die Speiseleitung 62 mündet.

Ausgangsseitig der zweiten Pumpe 16 erstreckt sich eine Ausbringleitung 68, die über entsprechende Abzweigungen 70 eingangsseitig zu den einzelnen Teilbreiten 20 des Verteilgestänges 18 sowie über eine Verbindungsleitung 72 zu einer Rezirkulationseinrichtung 74 führt. Die Rezirkulationseinrichtung 74 umfasst eine erste Rezirkulationsleitung 76 mit mehreren Abzweigungen 78 die ausgangsseitig mit den einzelnen Teilbreiten 20 des Verteilgestänges 18 verbunden sind. Die Rezirkulationseinrichtung 74 umfasst ferner ein regelbares drei-Wege Ventil 80 in welches die Verbindungsleitung 72 und die erste Rezirkulationsleitung 72, 76 münden. Ferner erstreckt sich ausgehend von dem Ventil 80 eine zweite Rezirkulationsleitung 82 die in den Tank 12 mündet.
Ausgehend von der zweiten Pumpe 16 in Richtung des Verteilgestänges 18 zweigt von der Ausbringleitung 68 eine erste Abzweigleitung 84, eine zweite Abzweigleitung 86 und eine dritte Abzweigleitung 88 ab. Die Abzweigleitungen 84, 86, 88 münden jeweils in eine regelbares 3-Wege Ventil 90, 92, 94. Das der ersten Abzweigleitung 84 zugeordnete Ventil 90 ist einerseits mit einer Spülleitung 96 und andererseits mit einer Umwälzleitung 98 verbunden. Das der zweiten Abzweigleitung 86 zugeordnete Ventil 92 ist einerseits mit einer Rückführleitung 100 und andererseits mit einer Venturileitung 102 verbunden. Das der dritten Abzweigleitung 88 zugeordnete Ventil 94 ist einerseits mit einer ersten Spülleitung 105 und andererseits mit einer zweiten Spülleitung 106 verbunden. Die Spülleitung 96 erstreckt sich ausgehend von der Spülleitung 60 zwischen Tank 12 und Rückschlagventil 58 zum Ventil 84. Die Umwälzleitung 98 führt ausgehend vom Ventil 90 in einen unteren Bereich des Tanks 12 und ist mit einer Spritzdüse 108 versehen.

Die Rückführleitung 100 erstreckt sich ausgehend von dem Ventil 92 und ist mit der der Rezirkulationseinrichtung 74 zugehörigen Rezirkulationsleitung 82 verbunden, die ebenfalls in den Tank 12 mündet. Die Venturileitung 102 führt ausgehend vom Ventil 92 über eine Venturieinrichtung 104 (z.B. Venturidüse) in den Tank 12.

Die mit dem Ventil 94 verbundene erste Spülleitung 105 zweigt direkt zwischen der ersten Pumpe 14 und dem Ventil 56 von der Befüllleitung 54 ab. Die mit dem Ventil 94 verbundene zweite Spülleitung 106 führt von dort zum Spritzmitteltank 26 und mündet in demselben mit einer Spritzdüse 110.

Zwischen Spritzmitteltank 26 und Venturieinrichtung 104 erstreckt sich eine Saugleitung 112, die über ein schaltbares Schließventil 114 geöffnet bzw. geschlossen werden kann.

Ferner sind in der Ausbringleitung 68 ausgehend von der Abzweigleitung 88 und vor der Rezirkulationseinrichtung 74 ein in Richtung der Rezirkulationseinrichtung 74 öffnendes Rückschlagventil 116, ein Durchflussmesser 118 und ein Drucksensor 120 vorgesehen.

Eine elektronische Steuereinheit (nicht gezeigt) ist mit den genannten Ventilen 40, 56, 64, 80, 90, 92, 94 und 114 verbunden und steuert das Spritzsystem 10 automatisch gemäß den Eingaben einer Bedienperson.

Insgesamt umfasst das Spritzsystem 10 folgende Funktionen, die durch die genannte Steuereinheit ansteuerbar bzw. realisierbar sind:
Befüllen des Tanks: Durch Anschließen des Füllventils 38 an einen Flüssigkeitstank und Öffnen desselben kann über die erste Pumpe 14 und dem in Richtung der Befüllleitung 54 geöffneten Ventil Applikationsträgerflüssigkeit in den Tank gefüllt werden.
Einspeisen von chemischen Applikationen, Rezirkulation und Ausbringen von Applikationsträgerflüssigkeit: Über die Speiseleitung 62 wird durch Öffnen des Ventils 64 die in dem Tank 12 befindliche Flüssigkeit schwerkraftbedingt zur zweiten nicht-selbstansaugenden Pumpe 16 geleitet und lädt diese mit Flüssigkeit auf. Die Pumpe 16 ist dazu unterhalb des Tanks 12 angeordnet, so dass Flüssigkeit aus dem Tank 12 schwerkraftbedingt und ohne Ansaugmittel in die Pumpe 16 strömen kann. Sobald diese zu fördern beginnt, wird die aus dem Tank 12 geförderte Flüssigkeit über das in Richtung zur Venturileitung 102 geöffnete Ventil 92 geleitet und erzeugt in der Venturieinrichtung 104 einen Unterdruck in der Saugleitung 112, wodurch bei geöffnetem Ventil 114 ein Ansaugen von Flüssigkeit aus dem Spritzmittelbehälter 26 erfolgt. Gleichzeitig kann aus dem Tank 12 geförderte Flüssigkeit über die Ausbringleitung 68 zum Verteilgestänge 18 bzw. zur Rezirkulationseinrichtung 74 gelangen. Bei in Richtung der Rezirkulationsleitung 82 geöffnetem Ventil 80 strömt die Flüssigkeit entsprechend über die Rezirkulationsleitung 76, sowie über die Abzweigungen 78 in die Rezirkulationsleitung 82 zurück in den Tank 12. Parallel dazu strömt jedoch auch Flüssigkeit über die Abzweigungen 70 in das Verteilgestänge 18 und kann über die dort angeordneten Spritzdüsen ausgebracht werden. Bei Schließen des Ventils 80 in Richtung der Rezirkulationsleitung 82 wird ein Rückströmen von Flüssigkeit durch die Rezirkulationsleitung 82 unterbrochen und die Flüssigkeit kann ohne Rückströmfunktion durch die am Verteilgestänge 18 angeordneten Spritzdüsen 22 ausgebracht werden. Das Einspeisen von Spritzmittel aus dem Spritzmitteltank 26 kann wahlweise durch Schließen des Ventils 92 in Richtung der Venturileitung 102 und/oder durch Schließen des Ventils 114 unterbrochen werden. Letzteres bewirkt, dass zwar ein Saugdruck an der Saugleitung 112 anliegen kann, jedoch keine Flüssigkeit aus dem Spritzmitteltank 26 abgesaugt werden kann. Durch Öffnen des Ventils 92 in Richtung der Rückführleitung 100 wird eine weitere Rezirkulationsfunktion gestellt, ohne dass die Flüssigkeit durch das Verteilgestänge strömen muss. Wurde die gewünschte Menge an Spritzmittel eingespeist, kann das Ventil 92 auch so geschlossen werden, dass keine Flüssigkeit zur Venturi- und/oder Rückführleitung 102, 100 gelangt. Wahlweise kann das Ventil 92 beim Ausbringen von Flüssigkeit auch zur Rückführleitung 82 hin geöffnet werden, so dass durch eine zusätzliche Rückführung von Flüssigkeit parallel zum Ausbringen eine verstärkte Umwälzung der Flüssigkeit im Tank 12 erzeugt wird.

Umwälzen der Flüssigkeit im Tank 12: Neben der bereits oben beschriebenen zusätzlichen Umwälzfunktion wird durch Öffnen des Ventils 90 in Richtung der Umwälzleitung 98 die aus dem Tank 12 geförderte Flüssigkeit direkt in den Tank 12 zurückgeführt, was eine primäre Umwälzung der dort enthaltenen Flüssigkeit bewirkt, wobei die Umwälzleitung 98 in einen unteren Bereich des Tanks 12 mündet. Durch Öffnen des Ventils 90 in Richtung der Spülleitung 96 kann Flüssigkeit in den oberen Bereich des Tanks 12, insbesondere zum Spülen bzw. Reinigen des Tanks 12 geführt werden.

Reinigen des Spritzsystems: Über das Ventil 40 können die Pumpen 14, 16 mit dem Frischwassertank 24 verbunden werden und Frischwasser zum Reinigen des Spritzsystems zum einen durch die Pumpe 16 über die Ausbringleitung 68 und den damit verbundenen Ventilen 80, 90, 92, 94 in die Leitungen 20, 70, 76, 78, 82, 84, 86, 88, 96, 98, 100, 102, 105, 106 und zum anderen auch über die Pumpe 14 und dem Ventil 56 in die Leitungen 54, 60 geführt werden. Ferner ist auch die Spülleitung 105 mit der Leitung 106 zum Spülen des Spritzmitteltanks 26 über das Ventil 94 verbindbar, wobei die Reinigung des Spritzmitteltanks 26 bzw. ein Durchspülen desselben vorzugsweise durch Öffnen des Ventils 114 und der Speisung der Venturileitung 102 und der Spülleitung 106 mit Frischwasser (über die Ventile 92, 94) erfolgen. Beim Reinigen der Spritzvorrichtung verhindert das Rückschlagventil 58 eine Kontamination der Spülleitung 60. Für den Fall, dass ein vorgemischtes Ausbringflüssigkeitsgemisch, also ein bereits mit einer chemischen Applikation belastetes Flüssigkeitsgemisch schon beim Befüllen des Tanks 12 verwendet wird, könnte das Befüllsystem auch unabhängig von dem übrigen Spritzsystem 10 durch die Pumpe 14 und die entsprechende Verbindung zum Frischwassertank 24 komplett gereinigt werden.

Verdünnen der Flüssigkeit im Tank 12: Durch Öffnen des Ventils in Richtung der Pumpe 14, sowie durch Öffnen des Ventils 56 in Richtung der Spülleitung 60 und/oder auch gegebenenfalls in Richtung der Befüllleitung 54 kann auch während eines Spritzbetriebs Frischwasser in den Tank 12 geleitet und die Flüssigkeit im Tank 12 mit Frischwasser verdünnt werden.

Die für die oben beschriebenen Betriebszustände erforderliche Steuerung der Ventile 38, 40, 56, 64, 80, 90, 92, 94, 114 erfolgt vollautomatisch über ein in der elektronischen Steuereinrichtung hinterlegtes Steuerprogramm. Die Erstellung und Implementierung eines solchen Steuerprogramms sind für einen Fachmann aus dem Bereich der landwirtschaftlichen Spritztechnik allgemein bekannte Maßnahmen.

Das oben beschriebenen Spritzsystems 10 umfasst auf besonders vorteilhafte Weise eine vollständig in das Spritzsystem 10 integrierte erste Pumpe 14, die ein selbst-ansaugendes Befüllen des Tanks 12 ermöglicht, ferner eine automatisch gesteuerte Umwälzung und Verdünnung der Spritzlösung, eine Reinigungsfunktion für den Spritzmitteltanks 26 und eine von der Befülleinrichtung fluidisch getrennte, das heißt nicht mit ihr in Flüssigkeitskontakt tretende Ausbringeinrichtung zum Ausbringen der Spritzlösung. Zudem kommen hier mit der ersten und der zweiten Pumpe 14, 16 nur zwei Pumpen, und damit ein Minimum an Pumpen, zum Einsatz, wodurch sich erheblich die Komplexität und Wartung des Spritzsystems reduziert und insbesondere im Hinblick auf Reinigungs- bzw. Spülvorgänge sich Vorteile gegenüber herkömmlichen Spritzsystemen ergeben. Insbesondere wird beispielsweise das gesamte Befüllsystem von chemischen Verunreinigungen durch die verwendeten chemischen Aplikationen (Spritzmittel) verschont. Dies reduziert insgesamt den Reinigungsaufwand und ermöglicht es auch die Befüllleitungen 34, 54 mit einem großen Leitungsquerschnitt auszustatten, um die Befüllzeiten für den Tank zu reduzieren, ohne dabei den Reinigungsaufwand zu erhöhen.

## Patentansprüche

1. Spritzsystem (10)
einer landwirtschaftlichen Feldspritze, mit einem Spritzgestänge zum Ausbringen einer Spritzlösung, einem Tank (12) für die Spritzlösung, einer Befülleinrichtung zum Befüllen des Tanks, einer Spüleinrichtung zum Spülen des Tanks, einer Umwälzeinrichtung zum Umwälzen der Spritzlösung im Tank, einer Ausbringeinrichtung zum Fördern der Spritzlösung aus dem Tank, einer integrierten selbstansaugenden Pumpe, (14) einer integrierten nicht selbstansaugenden Pumpe (16) und einer elektronischen Steuereinrichtung zum Steuern des Spritzsystems, **dadurch gekennzeichnet, dass** die selbstansaugende Pumpe ausschließlich zum Betreiben der Befülleinrichtung und der Spüleinrichtung und die nicht-selbstansaugende Pumpe zum Betreiben der Umwälzeinrichtung, der Ausbringeinrichtung und der Spüleinrichtung betreibbar ist, wobei die nicht-selbstansaugende Pumpe derart angeordnet ist, dass eine Aufladung schwerkraftbedingt durch Spritzlösung aus dem Tank erfolgt und die Befülleinrichtung fluidisch von der Umwälzeinrichtung und der Ausbringeinrichtung getrennt ist.

2. Spritzsystem nach Anspruch 1, **dadurch gekennzeichnet, dass** die Pumpen (14, 16) hydraulisch angetrieben sind.

3. Spritzsystem nach Anspruch 1, **dadurch gekennzeichnet, dass** die Pumpen (14, 16) elektrisch angetrieben sind.

4. Spritzsystem nach einem der vorhergehenden Ansprüche, **dadurch gekennzeichnet, dass** die (14, 16) als Zentrifugalpumpen ausgebildet sind.

5. Spritzsystem nach einem der vorhergehenden Ansprüche, **dadurch gekennzeichnet, dass** die Spüleinrichtung zum Verdünnen der Spritzlösung betreibbar ist.

6. Spritzsystem nach einem der vorhergehenden Ansprüche, **dadurch gekennzeichnet, dass** die Ausbringeinrichtung eine Saugeinrichtung umfasst durch welche eine Einspeisung einer chemischen Applikation aus einem Spritzmitteltank (26) erfolgt.

7. Spritzsystem nach einem der vorhergehenden Ansprüche, **dadurch gekennzeichnet, dass** die Ausbringeinrichtung eine Rezirkulationseinrichtung (74) umfasst durch welche die aus dem Tank (12) geförderte Spritzlösung in den Tank (12) zurückführbar ist.

## Claims

1. Spraying system (10) of an agricultural field spraying device, comprising a spraying linkage for discharging a spraying solution, a tank (12) for the spraying solution, a filling device for filling the tank, a flushing device for flushing the tank, a circulating device for circulating the spraying solution in the tank, a discharging device for conveying the spraying solution out of the tank, an integrated self-priming pump (14), an integrated non-self-priming pump (16) and an electronic control device for controlling the spraying system, **characterized in that** the self-priming pump is operable exclusively for operating the filling device and the flushing device, and the non-self-priming pump is operable for operating the circulating device, the discharging device and the flushing device, wherein the non-self-priming pump is arranged in such a manner that charging by means of spraying solution from the tank takes place because of gravity, and the filling device is fluidically separated from the circulating device and the discharging device.

2. Spraying system according to Claim 1, **characterized in that** the pumps (14, 16) are driven hydraulically.

3. Spraying system according to Claim 1, **characterized in that** the pumps (14, 16) are driven electrically.

4. Spraying system according to one of the preceding claims, **characterized in that** the (14, 16) are designed as centrifugal pumps.

5. Spraying system according to one of the preceding claims, **characterized in that** the flushing device is operable for diluting the spraying solution.

6. Spraying system according to one of the preceding claims, **characterized in that** the discharging device comprises a suction device by means of which a chemical application is fed in from a spraying agent tank (26).

7. Spraying system according to one of the preceding claims, **characterized in that** the discharging device comprises a recirculation device (74) by means of which the spraying solution conveyed out of the tank (12) is returnable into the tank (12).

## Revendications

1. Système de pulvérisation (10) pour pulvérisateur agricole, présentant une tringlerie de pulvérisation qui projette une solution à pulvériser, une cuve (12) pour la solution à pulvériser, un dispositif de remplissage qui permet de remplir la cuve, un dispositif de rinçage qui permet de rincer la cuve, un dispositif de brassage qui permet de brasser la solution de pulvérisation dans la cuve, un dispositif d'extraction qui permet de transporter la solution de pulvérisation hors de la cuve, une pompe auto-aspirante (14) intégrée, une pompe non auto-aspirante (16) intégrée et un dispositif électronique de commande qui commande le système de pulvérisation,
**caractérisé en ce que**
la pompe auto-aspirante peut être utilisée uniquement pour alimenter le dispositif de remplissage et le dispositif de rinçage et la pompe non auto-aspirante uniquement pour alimenter le dispositif de brassage, le dispositif d'extraction et le dispositif de rinçage,
**en ce que** la pompe non auto-aspirante est disposée de telle sorte que sa mise en charge s'effectue sous l'action de la gravité par l'intermédiaire de la solution de pulvérisation provenant de la cuve et
**en ce que** le dispositif de remplissage est séparé hydrauliquement du dispositif de brassage et du dispositif d'extraction.

2. Système de pulvérisation selon la revendication 1, **caractérisé en ce que** les pompes (14, 16) sont entraînées hydrauliquement.

3. Système de pulvérisation selon la revendication 1, **caractérisé en ce que** les pompes (14, 16) sont entraînées électriquement.

4. Système de pulvérisation selon l'une des revendications précédentes, **caractérisé en ce que** les (14, 16) sont configurées comme pompes centrifuges.

5. Système de pulvérisation selon l'une des revendications précédentes, **caractérisé en ce que** le dispositif de rinçage peut être utilisé pour diluer la solution de pulvérisation.

6. Système de pulvérisation selon l'une des revendications précédentes, **caractérisé en ce que** le dispositif d'extraction comporte un dispositif d'aspiration par lequel s'effectue l'introduction d'une application chimique provenant d'une cuve (26) à agent de pulvérisation.

7. Système de pulvérisation selon l'une des revendications précédentes, **caractérisé en ce que** le dispositif d'extraction comporte un dispositif de recirculation (74) par lequel la solution de pulvérisation transportée hors de la cuve (12) peut être renvoyée dans la cuve (12).
